# EUROPEAN PATENT SPECIFICATION

(11) **EP 3 993 534 B1**
(45) Date of publication and mention of the grant of the patent: **09.12.2026**
(21) Application number: 19935481.2
(22) Date of filing: 27.06.2019
(51) Int. Cl.: H04L 5/00, H04W 72/04, H04W 52/02, H04L 1/1829

(54) **HYBRID AUTOMATIC REPEAT REQUEST (HARQ) TRANSMISSION METHOD AND APPARATUS**
VERFAHREN UND VORRICHTUNG ZUR ÜBERTRAGUNG VON HYBRIDER AUTOMATISCHER WIEDERHOLUNGSANFORDERUNG (HARQ)
PROCÉDÉ ET APPAREIL DE TRANSMISSION DE REQUÊTE AUTOMATIQUE DE RÉPÉTITION HYBRIDE (HARQ)

(43) Date of publication of application: 04.05.2022
(73) Proprietor: Beijing Xiaomi Mobile Software Co., Ltd., Beijing 100085 (CN)
(72) Inventor: MU, Qin, Beijing 100085 (CN)
(74) Representative: dompatent
(86) International application number: PCT/CN2019/093287
(87) International publication number: WO 2020/258162

(56) References cited:
- EP-A1- 4 054 100
- CN-A- 109 155 703
- CN-A- 109 257 823
- US-A1- 2016 127 997
- QUALCOMM INCORPORATED: "PDCCH-based power saving channel design", vol. RAN WG1, no. Reno, USA; 20190513 - 20190517, 13 May 2019 (2019-05-13), XP051728734, Retrieved from the Internet <URL:http://www.3gpp.org/ftp/Meetings%5F3GPP%5FSYNC/RAN1/Docs/R1%2D1907294%2Ezip> [retrieved on 20190513]
- QUALCOMM INCORPORATED: "PDCCH-based power saving channel design", 3GPP TSG-RAN WG1 #97, R1-1907294, 17 May 2019 (2019-05-17), XP051728734, DOI: 20200307113858

## Description

### TECHNICAL FIELD

The disclosure relates to a field of communication technologies, and more particularly to a method of hybrid automatic repeat request (HARQ) transmission and an apparatus of HARQ transmission.

### BACKGROUND

In standards for mobile telecommunications developed by the 3rd Generation Partnership Project (3GPP), a power saving signal is introduced in order to save power. Existing power saving signals are designed based on New Radio - Physical Downlink Control Channel (NR-PDCCH), and the application scenarios are provided as follows.

In NR protocols, a terminal does not need to monitor the PDCCH all the time, but specifies some specific times to monitor the PDCCH. In related arts, a time period during which the PDCCH needs to be monitored is defined as active time. The active time can be an on duration time in the DRX or PDCCH monitoring occasions configured by a base station. When the active time comes, the terminal will wake up to monitor the PDCCH. In this case, there is a case that the terminal does not have a corresponding service to execute during the active time, which means that the PDCCH monitoring during the active time causes power waste. In this scenario, the power saving signal is introduced before the active time to prompt the terminal to wake up and monitor the PDCCH during the active time or to continue to sleep without waking up during the active time.

In addition, in the NR, when the terminal wakes up for service interaction, the frequency of PDCCH monitoring, the bandwidth needed by the terminal for the monitoring, the number of receiving or transmitting antennas can all be configured flexibly. For example, when there are dense services and a large amount of data, a large bandwidth, more antennas and denser PDCCH monitoring can be configured. At the same time, these high configurations may consume a lot of power. On the contrary, when there are relatively sparse services, the base station can adjust the configuration, for example, allowing the terminal to monitor a small bandwidth, using fewer antennas for receiving and configuring sparser PDCCH monitoring. In this case, the power saving signal can be used to switch or reconfigure these configurations.

In addition, in the NR, the terminal needs to perform the HARQ feedback on received Physical Downlink Shared Channel (PDSCH) or the PDCCH released by instructing the Semi-Persistent Scheduling (SPS). At the same time, the feedback can be performed for multiple transmissions in the NR, and multiple pieces of HARQ feedback information are encoded and put into a Physical Uplink Control Channel (PUCCH) for transmission. In related arts, the whole of the pieces of HARQ information that are fed back is called a codebook.

A size of the codebook in the NR can be semi-persistently configured by the base station. If the terminal is configured by the base station, with a codebook that is semi-persistently fed back, even if data schedule is not performed on a certain downlink subframe, NACK needs to be fed back for padding.

The existing power saving signal is generally before the on duration starts in Connected Discontinuous Reception (C-DRX) scenarios, and the base station will send the power saving signal to notify the user of waking up or continuing to sleep. In this scenario, there is generally no other data scheduling, and the HARQ feedback is generally only the feedback for the power saving signal. If the feedback is still performed based on the size of the codebook semi-persistently configured by the base station at this time, an additional overhead of uplink control resources will be wasted.

EP4054100A1 relates to transmission and reception of power saving command. A wireless device receives a downlink control information (DCI) comprising a first field indicating a transition of a cell to a dormant state and a second field indicating a hybrid automatic repeat request (HARQ) FEEDBACK TIMING. The wireless device transmits, in response to the DCI indicating the transition and via a physical uplink control channel resource, a positive acknowledgement of a reception of the DCI at a time interval based on the HARQ feedback timing. QUALCOMM INCORPORATED: "PDCCH-based power saving channel design", 3GPP DRAFT; R1-1907294; 13 May 2019 discloses a method of providing HARQ feedback for power saving signals based on a different scheduling DCI format, pointing to different PUCCH resources.

### SUMMARY

In order to overcome problems in related arts, embodiments of the disclosure provide a method of HARQ transmission according to independent claim 1, an apparatus of HARQ transmission according to independent claim 7, and a computer-readable storage medium according to claim 11. Further aspects of the present application are defined by the dependent claims.

It should be understood that the above general description and the following detailed description are only exemplary and explanatory, and cannot limit the disclosure.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
FIG. 1 is a flowchart illustrating a method of hybrid automatic repeat request (HARQ) transmission according to an exemplary embodiment.
FIG. 2 is a flowchart illustrating another method of HARQ transmission according to an exemplary embodiment.
FIG. 3 is a flowchart illustrating another method of HARQ transmission according to an exemplary embodiment.
FIG. 4 is a flowchart illustrating another method of HARQ transmission according to an exemplary embodiment.
FIG. 5 is a flowchart illustrating another method of HARQ transmission according to an exemplary embodiment.
FIG. 6 is a block diagram illustrating an apparatus of HARQ transmission according to an exemplary embodiment.
FIG. 7 is a block diagram illustrating another apparatus of HARQ transmission according to an exemplary embodiment.
FIG. 8 is a block diagram illustrating another apparatus of HARQ transmission according to an exemplary embodiment.
FIG. 9 is a block diagram illustrating another apparatus of HARQ transmission according to an exemplary embodiment.
FIG. 10 is a block diagram illustrating another apparatus of HARQ transmission according to an exemplary embodiment.
FIG. 11 is a block diagram illustrating another apparatus of HARQ transmission according to an exemplary embodiment.
FIG. 12 is a block diagram illustrating an apparatus of HARQ transmission according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

The terms used in the disclosure are only for the purpose of describing specific embodiments, and are not intended to limit the disclosure. The singular forms of "a", "said" and "the" used in the disclosure and appended claims are also intended to include plural forms, unless the context clearly indicates other meanings. It should also be understood that the term "and/or" as used herein refers to and includes any or all possible combinations of one or more associated listed items.

It should be understood that although the terms first, second, third, etc. may be used in this disclosure to describe various information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if" as used herein can be interpreted as "when" or "while" or "in response to determining".

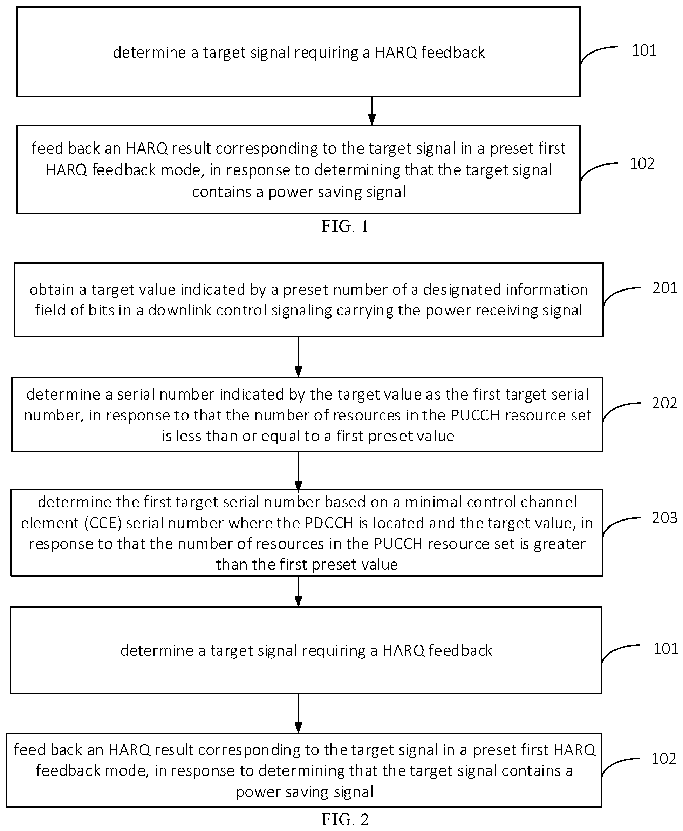

Embodiments of the disclosure provide a method of Hybrid Automatic Repeat Request (HARQ) transmission, which can be used in a terminal. FIG. 1 is a flowchart illustrating a method of HARQ transmission according to an exemplary embodiment, which is not according to the invention and is present for illustrative proposes only. The method includes the following.

In block 101, a target signal requiring a HARQ feedback is determined.

In this block, the terminal can determine which signal has been received based on a receiving situation, and use the received signal as the target signal on which the HARQ feedback needs to be performed.

In block 102, an HARQ result corresponding to the target signal is fed back in a preset first HARQ feedback mode, in response to determining that the target signal contains a power saving signal.

In this block, if the target signal only contains the power saving signal, that is, the terminal receives only the power saving signal, the preset first HARQ feedback mode may be used to feed back the HARQ result corresponding to the target signal.

In the above embodiments, the terminal can determine the corresponding HARQ feedback mode based on the target signal that needs to feedback the HARQ result, thereby saving the overhead of the uplink control resources.

In an embodiment, in the above method according to embodiments of the disclosure, the terminal semi-persistently configures, based on an indication from the base station, a target bit number for bits occupied by a target codebook in advance. The target codebook is HARQ information fed back on a HARQ feedback resource. In embodiments of the disclosure, the target codebook includes the entire HARQ information that needs to be fed back by a HARQ feedback resource. For example, the target codebook can carry N HARQ feedbacks of the Physical Downlink Shared Channel (PDSCH), and the terminal predetermines corresponding relationships between uplink subframes and downlink subframes with respect to the HARQ feedback in the target codebook, for example, the HARQ results of subframes 0, 1, 2, and 3 are fed back through the subframe 8.

In above embodiments, the terminal pre-configures, based on the indication from the base station, a target bit number for bits occupied by the target codebook. The target codebook is the HARQ information fed back on a HARQ feedback resource. In embodiments of the disclosure, the terminal can semi-persistently configure, based on the indication from the base station, the target bit number for bits occupied by the target codebook. Further, the terminal can still adopt different HARQ feedback modes for different target signals, thereby saving the overhead of the uplink control resources.

In an embodiment, if the target signal includes a power saving signal, then correspondingly, the target codebook includes the HARQ result corresponding to the power saving signal. In embodiments of the disclosure, in order to save the uplink control resources, the target codebook may not occupy the pre-configured target bit number, but only occupies 1 bit. That is, the target codebook only feeds back the HARQ result corresponding to the 1-bit power saving signal.

Correspondingly, the above block 102 includes: feeding back the HARQ result corresponding to the power saving signal through a Physical Uplink Control Channel (PUCCH) resource corresponding to a first target serial number, in which the PUCCH resource is from a PUCCH resource set that is pre-allocated to the terminal by the base station.

In the PUCCH resource set, the terminal feeds back only the HARQ result corresponding to the power saving signal through the PUCCH resource corresponding to the 1-bit first target serial number.

In above embodiments, if the target signal includes a power saving signal, the target codebook includes the HARQ result corresponding to the power saving signal, where the number of bits currently occupied by the target codebook is 1 which is not the target bit number of the target codebook that is pre-configured based on the indication from the base station. That is, if the target signal only includes the power saving signal, the target codebook only includes the HARQ result corresponding to the 1-bit power saving signal. Further, when the first HARQ feedback mode is used for feedback, in the PUCCH resource set pre-allocated to the terminal by the base station, the HARQ result corresponding to the power saving signal may be fed back through the PUCCH resource corresponding to the first target serial number, to realize a purpose of saving the overhead of the uplink control resources.

In an embodiment, as illustrated in FIG. 2, where FIG. 2 is a flowchart illustrated another method of HARQ transmission according to embodiments of FIG. 1, the process of determining the first target serial number by the terminal includes the following.

In block 201, a target value indicated by a preset number of bits of a designated information field is obtained in a downlink control signaling carrying the power receiving signal.

In embodiments of the disclosure, the preset number of bits may be 3, and the range of the target value indicated by the designated information field in the downlink control signaling may be 0 to 7.

In block 202, a serial number indicated by the target value is determined as the first target serial number, in response to that the number of resources in the PUCCH resource set is less than or equal to a first preset value.

In this block, optionally, the first preset value is 8. If the number of resources in the PUCCH resource set pre-allocated to the terminal by the base station is less than or equal to 8, the terminal can directly use the serial number indicated by the target value as the first target serial number. For example, if the target value is 6, the first target serial number is also 6.

In block 203, the first target serial number is determined based on the target value and a minimal Control Channel Element (CCE) serial number where the PDCCH is located, in response to that the number of resources in the PUCCH resource set is greater than the first preset value.

In this block, if the number of resources in the PUCCH resource set pre-allocated by the base station to the terminal is large and exceeds the first preset value, it is necessary to determine the first target serial number based on the number of the minimal CCE serial number where the PDCCH is located and the target value.

Optionally, the first target serial number ${r}_{PUCCH}^{1}$ is determined by a following formula: ${r}_{PUCCH}^{1} = \left\{\begin{matrix}\left⌊\frac{{n}_{CCE , p} ⋅ \left⌈{R}_{PUCCH}/8\right⌉}{{N}_{CCE , p}}\right⌋ + {Δ}_{PRI} ⋅ \left⌈\frac{{R}_{PUCCH}}{8}\right⌉ & if {Δ}_{PRI} < {R}_{PUCCH} mod 8 \\ \left⌊\frac{{n}_{CCE , p} ⋅ \left⌊{R}_{PUCCH}/8\right⌋}{{N}_{CCE , p}}\right⌋ + {Δ}_{PRI} ⋅ \left⌊\frac{{R}_{PUCCH}}{8}\right⌋ + {R}_{PUCCH} mod 8 & if {Δ}_{PRI} \geq {R}_{PUCCH} mod 8\end{matrix}\right\}$ , where *R_{PUCCH}* is a size of the PUCCH resource set configured by the base station for the terminal, *N_{CCE,p}* is a total number of CCEs occupied by the control field where the PDCCH is located, *n_{CCE,p}* is the minimal CCE serial number where the PDCCH is located, and Δ*_{PRI}* is the target value indicated by the designated information field in the downlink control signaling.

In above embodiments, in determining the first target serial number, optionally, the terminal may obtain the target value indicated by a preset number of bits of a designated information field in the downlink control signaling carrying the power reception signal. If the number of resources in the PUCCH resource set is less than or equal to the first preset value, the terminal can directly determine the serial number indicated by the target value as the first target serial number. If the number of resources in the PUCCH resource set is greater than the first preset value, the terminal can determine the first target serial number based on the minimal CCE serial number where the PDCCH is located and the target value. Therefore, the process has a high availability.

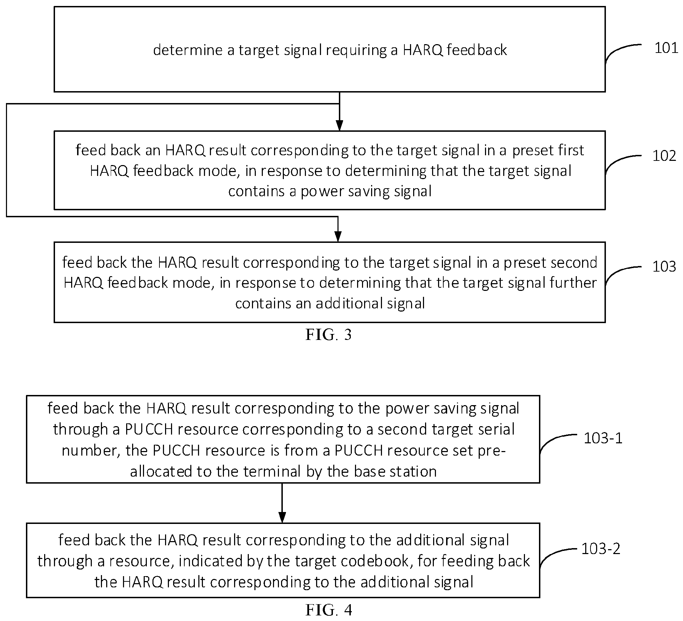

In an embodiment, as illustrated in FIG. 3, where FIG. 3 is a flowchart illustrating another method of HARQ transmission according to embodiments of FIG. 1. The method further includes the following.

In block 103, the HARQ result corresponding to the target signal is fed back in a preset second HARQ feedback mode, in response to determining that the target signal further contains an additional signal.

In this block, if the target signal further contains an additional signal other than the power saving signal, the HARQ result corresponding to the target signal is fed back by the terminal in the preset second HARQ feedback mode.

In above embodiments, if the terminal determines that the target signal that requires the HARQ feedback further contains an additional signal, the terminal may feedback the HARQ result corresponding to the target signal in the preset second HARQ feedback mode. In the above process, the terminal can determine the corresponding HARQ feedback mode based on the target signal that requires the feedback of the HARQ result, thereby saving the overhead of the uplink control resources.

In an embodiment, if the terminal determines that the target signal further contains an additional signal other than the power saving signal, correspondingly, the target codebook includes not only the HARQ result corresponding to the power saving signal, but also the HARQ result corresponding to the additional signal. Therefore, the number of bits currently occupied by the target codebook is the target bit number of the target codebook pre-configured by the terminal based on the indication from the base station.

Correspondingly, as illustrated in FIG. 4, where FIG. 4 is a flowchart illustrating another method of HARQ transmission according to embodiments of FIG. 3, the block 103 may include the following.

In block 103-1, the HARQ result corresponding to the power saving signal is fed back through a PUCCH resource corresponding to a second target serial number, in which the PUCCH resource is from a PUCCH resource set pre-allocated to the terminal by the base station.

In this block, the terminal feeds back the HARQ result corresponding to the power saving signal through the PUCCH resource corresponding to the second target serial number.

In block 103-2, the HARQ result corresponding to the additional signal is fed back through a resource, indicated by the target codebook, for feeding back the HARQ result corresponding to the additional signal.

In this block, assuming the target codebook previously indicates that the HARQ results corresponding to subframes 0, 1, 2, and 3 are fed back on a subframe 8, the HARQ result of the additional signal (such as the subframes 0, 1, 2, and 3) is fed back through the subframe 8 indicated by the target codebook according to related arts.

In above embodiments, if the target signal further includes an additional signal in addition to the power saving signal, the target codebook includes not only the HARQ result corresponding to the power saving signal, but also the HARQ result corresponding to the additional signal, and the number of bits currently occupied by the target codebook is the target bit number of the target codebook pre-configured by the base station for the terminal. Further, in feeding back the HARQ result corresponding to the target signal by the terminal in the second HARQ feedback mode, the PUCCH resource corresponding to the second target serial number and from the PUCCH resource set that is pre-allocated to the terminal by the base station may be used to feed back the HARQ result corresponding to the power saving signal, and the additional signal is fed back through an existing mode in related arts, that is, the HARQ result corresponding to the additional signal is fed back through the resource indicated by the target codebook for feeding back the HARQ result corresponding to the additional signal. In the above process, different HARQ feedback modes are adopted for different target signals, which also achieves a purpose of saving the overhead of the uplink control resources.

It should be noted that if the target signal includes the additional signal in addition to the power saving signal and if a certain bit in the target codebook is not padded by the HARQ results, the bit needs to be padded with the NACK.

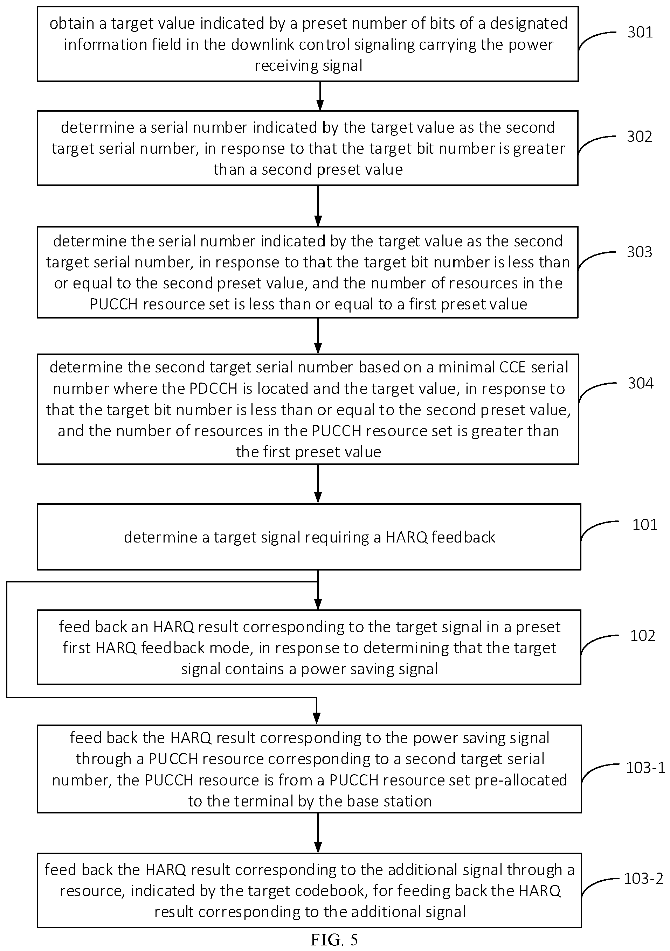

In an embodiment, as illustrated in FIG. 5, where FIG. 5 is a flowchart illustrating another method of HARQ transmission according to embodiments of FIG. 4, the process of determining the second target serial number by the terminal includes the following.

In block 301, a target value indicated by a preset number of bits of a designated information field in the downlink control signaling carrying the power receiving signal is obtained.

In embodiments of the disclosure, the preset number of bits may be 3, and the range of the target value indicated by the designated information field in the downlink control signaling may be 0 to 7.

In block 302, a serial number indicated by the target value is determined as the second target serial number, in response to that the target bit number is greater than a second preset value.

In this block, optionally, the second preset value is 2. If the number of bits occupied by the target codebook is greater than 2, and if the number of resources in the PUCCH resource set pre-configured by the base station for the terminal is at most 8, the serial number indicated by the target value can be directly determined as the second target serial number.

In block 303, the serial number indicated by the target value is determined as the second target serial number, in response to that the target bit number is less than or equal to the second preset value, and the number of resources in the PUCCH resource set is less than or equal to a first preset value.

In this block, if the number of bits occupied by the target codebook is 1 or 2, which is less than or equal to the second preset value, and the number of resources in the PUCCH resource set is less than or equal to the first preset value, the terminal can also directly determine the serial number indicated by the target value as the second target serial number.

In block 304, the second target serial number is determined based on a minimal CCE serial number where the PDCCH is located and the target value, in response to that the target bit number is less than or equal to the second preset value, and the number of resources in the PUCCH resource set is greater than the first preset value.

In this block, if the number of bits occupied by the target codebook is 1 or 2, which is less than or equal to the second preset value, and the number of resources in the PUCCH resource set is greater than the first preset value, the terminal can determine the second target serial number ${r}_{PUCCH}^{2}$ according to a following formula: ${r}_{PUCCH}^{2} = \left\{\begin{matrix}\left⌊\frac{{n}_{CCE , p} ⋅ \left⌈{R}_{PUCCH}/8\right⌉}{{N}_{CCE , p}}\right⌋ + {Δ}_{PRI} ⋅ \left⌈\frac{{R}_{PUCCH}}{8}\right⌉ & if {Δ}_{PRI} < {R}_{PUCCH} mod 8 \\ \left⌊\frac{{n}_{CCE , p} ⋅ \left⌊{R}_{PUCCH}/8\right⌋}{{N}_{CCE , p}}\right⌋ + {Δ}_{PRI} ⋅ \left⌊\frac{{R}_{PUCCH}}{8}\right⌋ + {R}_{PUCCH} mod 8 & if {Δ}_{PRI} \geq {R}_{PUCCH} mod 8\end{matrix}\right\}$ , where *R_{PUCCH}* is a size of the PUCCH resource set configured by the base station for the terminal, *N_{CCE,p}* is a total number of CCEs occupied by the control field where the PDCCH is located, *n_{CCE,p}* is the minimal CCE serial number where the PDCCH is located, and Δ*_{PRI}* is the target value indicated by the designated information field in the downlink control signaling.

In above embodiments, in determining the second target serial number, if the target bit number of bits occupied by the target codebook pre-configured by the base station for the terminal is greater than the second preset value, the terminal may directly use the serial number indicated by the target value indicated by the preset number of bits of the designated information field in the downlink control signaling carrying the power reception signal as the second target serial number. If the target bit number is less than or equal to the second preset value, and the number of resources of the PUCCH resource set is less than or equal to the first preset value, the terminal can also determine the serial number indicated by the target value as the second target serial number. If the target bit number is less than or equal to the second preset value, and the number of resources in the PUCCH resource set is greater than the first preset value, the terminal can determine the second target serial number according to the minimal CCE serial number where the PDCCH is located and the target value. Therefore, the availability is high.

Corresponding to above embodiments of the application function realization method, the disclosure also provides embodiments of an application function realization apparatus and a corresponding terminal.

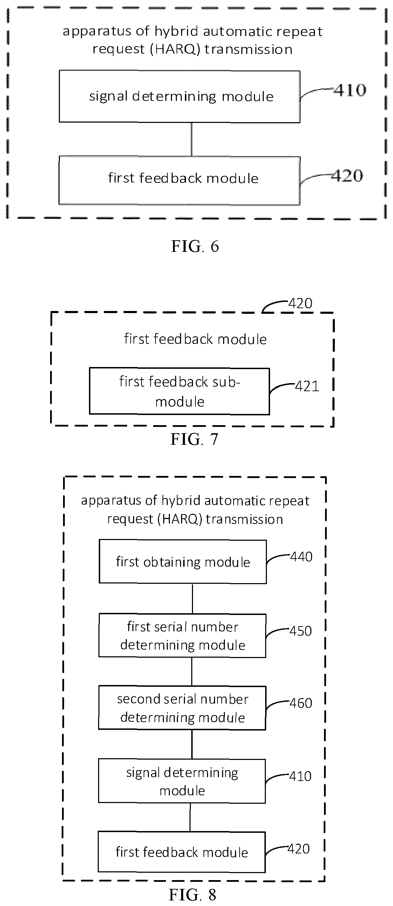

As illustrated in FIG. 6, FIG. 6 is a block diagram illustrating an apparatus of hybrid automatic repeat request (HARQ) transmission according to an exemplary embodiment, which is not according to the invention and is present for illustrative purposes only. The apparatus is used in a terminal and includes: a signal determining module 410 and a first feedback module 420.

The signal determining module 410 is configured to determine a target signal requiring a HARQ feedback.

The first feedback module 420 is configured to feed back an HARQ result corresponding to the target signal in a preset first HARQ feedback mode, in response to determining that the target signal contains a power saving signal.

The terminal pre-configures, based on an indication from a base station, a target bit number for bits occupied by a target codebook, and the target codebook is HARQ information fed back by an HARQ feedback resource.

In some embodiments, the target codebook contains the HARQ result corresponding to the power saving signal, and the number of bits currently occupied by the target codebook is 1.

As illustrated in FIG. 7, FIG. 7 is a block diagram illustrating another apparatus of hybrid automatic repeat request (HARQ) transmission based on embodiments shown in FIG. 6. The first feedback module 420 includes: a first feedback sub-module 421, configured to feed back the HARQ result corresponding to the power saving signal through a physical uplink control channel (PUCCH) resource corresponding to a first target serial number.

As illustrated in FIG. 8, FIG. 8 is a block diagram illustrating another apparatus of hybrid automatic repeat request (HARQ) transmission based on embodiments shown in FIG. 6. The apparatus further includes: a first obtaining module 440, a first serial number determining module 450 and a second serial number determining module 460.

The first obtaining module 440 is configured to obtain a target value indicated by a preset number of bits of a designated information field in a downlink control signaling carrying the power receiving signal.

The first serial number determining module 450 is configured to determine a serial number indicated by the target value as the first target serial number, in response to that the number of resources in the PUCCH resource set is less than or equal to a first preset value.

The second serial number determining module 460 is configured to determine the first target serial number based on a minimal control channel element (CCE) serial number where the PDCCH is located and the target value, in response to that the number of resources in the PUCCH resource set is greater than the first preset value.

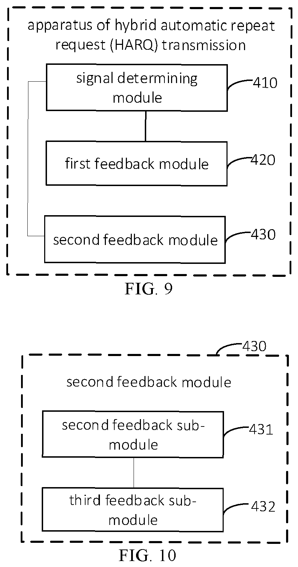

As illustrated in FIG. 9, FIG. 9 is a block diagram illustrating another apparatus of hybrid automatic repeat request (HARQ) transmission based on embodiments shown in FIG. 6. The apparatus further includes: a second feedback module 430, configured to feed back the HARQ result corresponding to the target signal in a preset second HARQ feedback mode, in response to determining that the target signal further contains an additional signal.

In some embodiments, the target codebook includes an HARQ result corresponding to the additional signal, the number of bits currently occupied by the target codebook is the target bit number.

As illustrated in FIG. 10, FIG. 10 is a block diagram illustrating another apparatus of hybrid automatic repeat request (HARQ) transmission based on embodiments shown in FIG. 9. the second feedback module 430 includes: a second feedback sub-module 431 and a third feedback sub-module 432.

The second feedback sub-module 431 is configured to feed back the HARQ result corresponding to the power saving signal through a physical uplink control channel (PUCCH) resource corresponding to a second target serial number.

The third feedback sub-module 432 is configured to feed back the HARQ result corresponding to the additional signal through a resource, indicated by the target codebook, for feeding back the HARQ result corresponding to the additional signal.

Optionally, each bit in the target codebook that is not occupied by the HARQ results is set as NACK.

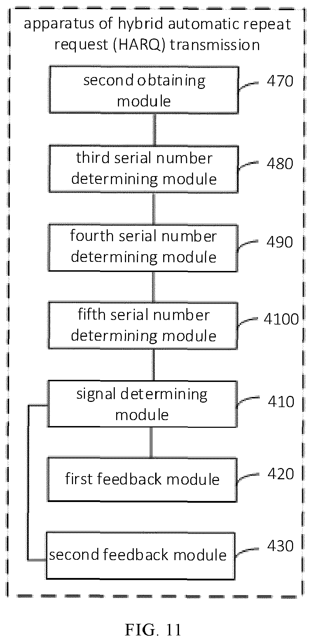

As illustrated in FIG. 11, FIG. 11 is a block diagram illustrating another apparatus of hybrid automatic repeat request (HARQ) transmission based on embodiments shown in FIG. 10. The apparatus further includes: a second obtaining module 470, a third serial number determining module 480, a fourth serial number determining module 490 and a fifth serial number determining module 4100.

The second obtaining module 470 is configured to obtain a target value indicated by a designated information field of the preset number of bits in the downlink control signaling carrying the power receiving signal.

The third serial number determining module 480 is configured to determine a serial number indicated by the target value as the second target serial number, in response to that the target bit number is greater than a second preset value.

The fourth serial number determining module 490 is configured to determine the serial number indicated by the target value as the second target serial number, in response to that the target bit number is less than or equal to the second preset value, and the number of resources in the PUCCH resource set is less than or equal to a first preset value.

The fifth serial number determining module 4100 is configured to determine the second target serial number based on a minimal control channel element (CCE) serial number where the PDCCH is located and the target value, in response to that the target bit number is less than or equal to the second preset value, and the number of resources in the PUCCH resource set is greater than the first preset value.

Generally, the device embodiments correspond to the method embodiments, and the relevant part can refer to the part of the description of the method embodiments. The device embodiments described above are merely illustrative. The units described above as separate components may or may not be physically separated, and the components displayed as units may or may not be physical units, that is, the units may be located in one location, or can be distributed to multiple network units. Some or all of the modules can be selected according to actual needs to achieve the objectives of the solution of the disclosure. Those of ordinary skill in the art can understand and implement it without inventive works.

Correspondingly, in the disclosure, a computer-readable storage medium having a computer program stored thereon is provided. The computer program is configured to execute the method of hybrid automatic repeat request (HARQ) transmission according to any one of the embodiments.

Correspondingly, in the disclosure, an apparatus of hybrid automatic repeat request (HARQ) transmission for a terminal is provided. The apparatus includes: a processor and a memory for storing processor executable instructions.

The processor is configured to: determine a target signal requiring a HARQ feedback; and feedback an HARQ result corresponding to the target signal in a preset first HARQ feedback mode, in response to determining that the target signal contains a power saving signal.

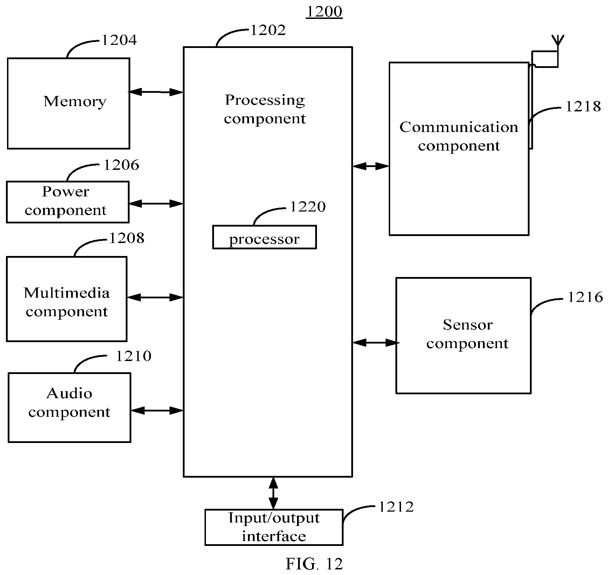

FIG. 12 is a block diagram of an electronic device 1200 according to an exemplary embodiment. For example, the electronic device 1200 may be a terminal such as a mobile phone, a tablet computer, an e-book reader, a multimedia playback device, a wearable device, and a vehicle-mounted terminal.

As illustrated in FIG. 12, the electronic device 1200 may include one or more of the following components: a processing component 1202, a memory 1204, a power component 1206, a multimedia component 1208, an audio component 1210, an input/output (I/O) interface 1212, a sensor component 1214, and a communication component 1216.

The processing component 1202 generally controls overall operations of the electronic device 1200, such as the operations associated with display, telephone calls, data communications, camera operations, and recording operations. The processing component 1202 may include one or more processors 1220 to execute instructions to perform all or part of the steps in the above described method. Moreover, the processing component 1202 may include one or more modules which facilitate the interaction between the processing component 1202 and other components. For instance, the processing component 1202 may include a multimedia module to facilitate the interaction between the multimedia component 1208 and the processing component 1202. For another example, the processing component 1202 may read executable instructions from the memory to implement the steps of the method of hybrid automatic repeat request (HARQ) transmission provided by the foregoing embodiments.

The memory 1204 is configured to store various types of data to support the operation of the electronic device 1200. Examples of such data include instructions for any applications or methods operated on the electronic device 1200, contact data, phonebook data, messages, pictures, video, etc. The memory 1204 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1206 provides power to various components of the electronic device 1200. The power component 1206 may include a power management system, one or more power sources, and any other components associated with the generation, management, and distribution of power in the electronic device 1200.

The multimedia component 1208 includes a screen providing an output interface between the electronic device 1200 and the user. In some embodiments, the multimedia component 1208 includes a front camera and/or a rear camera. When the electronic device 1200 is in an operation mode, such as a shooting mode or a video mode, the front camera and/or the rear camera can receive external multimedia data. Each front camera and rear camera can be a fixed optical lens system or have focal length and optical zoom capabilities.

The audio component 1210 is configured to output and/or input audio signals. For example, the audio component 1210 includes a microphone (MIC) configured to receive an external audio signal when the electronic device 1200 is in an operation mode, such as a call mode, a recording mode, and a voice recognition mode. The received audio signal may be further stored in the memory 1204 or transmitted via the communication component 1216. In some embodiments, the audio component 1210 further includes a speaker to output audio signals.

The I/O interface 1212 provides an interface between the processing component 1202 and peripheral interface modules, such as a keyboard, a click wheel, buttons, and the like. The buttons may include, but are not limited to, a home button, a volume button, a starting button, and a locking button.

The sensor component 1216 includes one or more sensors to provide status assessments of various aspects of the electronic device 1200. For instance, the sensor component 1216 may detect an open/closed status of the electronic device 1200, relative positioning of components, e.g., the display and the keypad, of the electronic device 1200, a change in position of the electronic device 1200 or a component of the electronic device 1200, a presence or absence of user contact with the electronic device 1200, an orientation or an acceleration/deceleration of the electronic device 1200, and a change in temperature of the electronic device 1200. The sensor component 1216 may include a proximity sensor configured to detect the presence of nearby objects without any physical contact. The sensor component 1216 may also include a light sensor, such as a CMOS or CCD image sensor, for use in imaging applications. In some embodiments, the sensor component 1216 may also include an accelerometer sensor, a gyroscope sensor, a magnetic sensor, a pressure sensor, or a temperature sensor.

The communication component 1218 is configured to facilitate communication, wired or wirelessly, between the electronic device 1200 and other devices. The electronic device 1200 can access a wireless network based on a communication standard, such as WiFi, 2G, or 3G, or a combination thereof. In an exemplary embodiment, the communication component 1216 receives a broadcast signal or broadcast associated information from an external broadcast management system via a broadcast channel. In an exemplary embodiment, the communication component 1218 further includes a near field communication (NFC) module to facilitate short-range communications. For example, the NFC module may be implemented based on a radio frequency identity (RFID) technology, an infrared data association (IrDA) technology, an ultra-wideband (UWB) technology, a Bluetooth (BT) technology, and other technologies.

In exemplary embodiments, the electronic device 1200 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described method.

In exemplary embodiments, there is also provided a non-transitory computer readable storage medium including instructions, such as included in the memory 1204, executable by the processor 1220 in the electronic device 1200, for performing the above method. For example, the non-transitory computer-readable storage medium may be a ROM, a RAM, a CD-ROM, a magnetic tape, a floppy disc, an optical data storage device, and the like.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples be considered as exemplary only, with a true scope of the disclosure being indicated by the claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A method of hybrid automatic repeat request, HARQ, transmission, executed by a terminal, the method comprising:
determining (101) a target signal requiring a HARQ feedback; and
feeding back (102) an HARQ result corresponding to the target signal in a preset first HARQ feedback mode, in response to determining that the target signal contains a power saving signal;
wherein the terminal pre-configures, based on an indication from a base station, a target bit number for bits occupied by a target codebook, wherein the target codebook is HARQ feedback fed back by an HARQ feedback resource;
wherein the method further comprises: feeding back (103) the HARQ result corresponding to the target signal in a preset second HARQ feedback mode, in response to determining that the target signal further contains a signal other than the power saving signal;
the method being **characterized in that**, wherein the target codebook contains the HARQ result corresponding to the power saving signal, and the number of bits currently occupied by the target codebook is 1; and wherein the target codebook comprises an HARQ result corresponding to the signal other than the power saving signal, and the number of bits currently occupied by the target codebook is the target bit number.

2. The method according to claim 1,
wherein feeding back (102) the HARQ result corresponding to the target signal in the preset first HARQ feedback mode, comprises:
feeding back the HARQ result corresponding to the power saving signal through a physical uplink control channel, PUCCH, resource corresponding to a first target serial number, wherein the PUCCH resource is from a PUCCH resource set pre-allocated to the terminal by the base station.

3. The method according to claim 2, wherein the first target serial number is determined by:
obtaining (201) a target value indicated by a preset number of bits of a designated information field in a downlink control signaling carrying the power receiving signal;
determining (202) a serial number indicated by the target value as the first target serial number, in response to that the number of resources in the PUCCH resource set is less than or equal to a first preset value; and
determining (203) the first target serial number based on a minimal control channel element, CCE, serial number where the PDCCH is located and the target value, in response to that the number of resources in the PUCCH resource set is greater than the first preset value.

4. The method according to claim 1,
wherein feeding back (103) the HARQ result corresponding to the target signal in the preset second HARQ feedback mode, comprises:
feeding back (103-1) the HARQ result corresponding to the power saving signal through a physical uplink control channel, PUCCH, resource corresponding to a second target serial number, wherein the PUCCH resource is from a PUCCH resource set pre-allocated to the terminal by the base station; and
feeding back (103-2) the HARQ result corresponding to the signal other than the power saving signal through a resource, indicated by the target codebook, for feeding back the HARQ result corresponding to the signal other than the power saving signal.

5. The method according to claim 4, wherein each bit in the target codebook that is not occupied by the HARQ result is set as NACK.

6. The method according to claim 5, wherein the second target serial number is determined by:
obtaining (301) a target value indicated by a preset number of bits of a designated information field in the downlink control signaling carrying the power receiving signal;
determining (302) a serial number indicated by the target value as the second target serial number, in response to that the target bit number is greater than a second preset value;
determining (303) the serial number indicated by the target value as the second target serial number, in response to that the target bit number is less than or equal to the second preset value, and the number of resources in the PUCCH resource set is less than or equal to a first preset value; and
determining (304) the second target serial number based on a minimal control channel element, CCE, serial number where the PDCCH is located and the target value, in response to that the target bit number is less than or equal to the second preset value, and the number of resources in the PUCCH resource set is greater than the first preset value.

7. An apparatus of hybrid automatic repeat request, HARQ transmission, integrated into a terminal, the apparatus comprising:
a signal determining module (410), configured to determine a target signal requiring a HARQ feedback; and
a first feedback module (420), configured to feed back an HARQ result corresponding to the target signal in a preset first HARQ feedback mode, in response to determining that the target signal contains a power saving signal;
wherein the terminal pre-configures, based on an indication from a base station, a target bit number for bits occupied by a target codebook, wherein the target codebook is HARQ feedback fed back by an HARQ feedback resource;
wherein the apparatus further comprises: a second feedback module (430), configured to feed back the HARQ result corresponding to the target signal in a preset second HARQ feedback mode, in response to determining that the target signal further contains a signal other than the power saving signal;
the apparatus being **characterized in that**, wherein the target codebook contains the HARQ result corresponding to the power saving signal, and the number of bits currently occupied by the target codebook is 1; and wherein the target codebook comprises an HARQ result corresponding to the signal other than the power saving signal, the number of bits currently occupied by the target codebook is the target bit number;.

8. The apparatus according to claim 7,
wherein the first feedback module (420) comprises:
a first feedback sub-module (421), configured to feed back the HARQ result corresponding to the power saving signal through a physical uplink control channel, PUCCH, resource corresponding to a first target serial number, wherein the PUCCH resource is from a PUCCH resource set pre-allocated to the terminal by the base station.

9. The apparatus according to claim 8, further comprising:
a first obtaining module (440), configured to obtain a target value indicated by a preset number of bits of a designated information field in a downlink control signaling carrying the power receiving signal;
a first serial number determining module (450), configured to determine a serial number indicated by the target value as the first target serial number, in response to that the number of resources in the PUCCH resource set is less than or equal to a first preset value; and
a second serial number determining module (460), configured to determine the first target serial number based on a minimal control channel element, CCE serial number where the PDCCH is located and the target value, in response to that the number of resources in the PUCCH resource set is greater than the first preset value.

10. The apparatus according to claim 7,
wherein the second feedback module (430) comprises:
a second feedback sub-module (431), configured to feed back the HARQ result corresponding to the power saving signal through a physical uplink control channel, PUCCH, resource corresponding to a second target serial number, wherein the PUCCH resource is from a PUCCH resource set pre-allocated to the terminal by the base station; and
a third feedback sub-module (432), configured to feed back the HARQ result corresponding to the signal other than the power saving signal through a resource, indicated by the target codebook, for feeding back the HARQ result corresponding to the signal other than the power saving signal.

11. A computer-readable storage medium having a computer program stored thereon, wherein the computer program is configured to execute the method of hybrid automatic repeat request, HARQ, transmission according to any one of claims 1-6.

## Patentansprüche

1. Verfahren zur Hybrid-Automatic-Repeat-Request-, HARQ, Übertragung, das von einem Endgerät ausgeführt wird, wobei das Verfahren umfasst:
Bestimmen (101) eines Zielsignals, das ein HARQ-Feedback erfordert; und
Rückmelden (102) eines dem Zielsignal entsprechenden HARQ-Ergebnisses in einem voreingestellten ersten HARQ-Feedback-Modus, als Reaktion auf das Bestimmen, dass das Zielsignal ein Energiesparsignal enthält;
wobei das Endgerät auf der Grundlage einer Angabe einer Basisstation eine Zielbitanzahl für die von einem Zielcodebuch belegten Bits vorkonfiguriert, wobei das Zielcodebuch ein HARQ-Feedback ist, das von einer HARQ-Feedback-Ressource zurückgemeldet wird;
wobei das Verfahren ferner umfasst: Rückmelden (103) des dem Zielsignal entsprechenden HARQ-Ergebnisses in einem voreingestellten zweiten HARQ-Feedback-Modus, als Reaktion auf das Bestimmen, dass das Zielsignal ferner ein anderes Signal als das Energiesparsignal enthält;
wobei das Verfahren **dadurch gekennzeichnet ist, dass** das Zielcodebuch das dem Energiesparsignal entsprechende HARQ-Ergebnis enthält und die Anzahl der Bits, die derzeit vom Zielcodebuch belegt sind, 1 beträgt; und
das Zielcodebuch ein HARQ-Ergebnis aufweist, das dem Signal entspricht, das sich von dem Energiesparsignal unterscheidet, und die Anzahl der Bits, die derzeit vom Zielcodebuch belegt sind, der Zielbitanzahl entspricht.

2. Verfahren nach Anspruch 1,
wobei das Rückmelden (102) des dem Zielsignal entsprechenden HARQ-Ergebnisses in dem voreingestellten ersten HARQ-Feedback-Modus umfasst:
Rückmelden des dem Energiesparsignal entsprechenden HARQ-Ergebnisses über eine Physical-Uplink-Control-Channel-, PUCCH, Ressource, die einer ersten Zielseriennummer entspricht, wobei die PUCCH-Ressource aus einem PUCCH-Ressourcensatz stammt, der dem Endgerät von der Basisstation vorab zugewiesen wird.

3. Verfahren nach Anspruch 2, wobei die erste Zielseriennummer bestimmt wird durch:
Erfassen (201) eines Zielwerts, der durch eine voreingestellte Anzahl von Bits eines bestimmten Informationsfeldes in einer Downlink-Steuersignalisierung angegeben ist, die das Leistungsempfangssignal trägt;
Bestimmen (202) einer durch den Zielwert angegebenen Seriennummer als erste Zielseriennummer, als Reaktion darauf, dass die Anzahl der Ressourcen im PUCCH-Ressourcensatz kleiner oder gleich einem ersten voreingestellten Wert ist; und
Bestimmen (203) der ersten Zielseriennummer auf der Grundlage einer Seriennummer eines minimalen Steuerkanalelements, CCE, in dem sich der PDCCH befindet, und des Zielwerts, als Reaktion darauf, dass die Anzahl der Ressourcen im PUCCH-Ressourcensatz größer ist als der erste voreingestellte Wert.

4. Verfahren nach Anspruch 1,
wobei das Rückmelden (103) des dem Zielsignal entsprechenden HARQ-Ergebnisses in dem voreingestellten zweiten HARQ-Feedback-Modus umfasst:
Rückmelden (103-1) des dem Energiesparsignal entsprechenden HARQ-Ergebnisses über eine Physical-Uplink-Control-Channel-, PUCCH, Ressource, die einer zweiten Zielseriennummer entspricht, wobei die PUCCH-Ressource aus einem PUCCH-Ressourcensatz stammt, der dem Endgerät von der Basisstation vorab zugewiesen wird; und
Rückmelden (103-2) des HARQ-Ergebnisses, das dem Signal entspricht, das sich von dem Energiesparsignal unterscheidet, über eine Ressource, die durch das Zielcodebuch angegeben ist, um das HARQ-Ergebnis rückzumelden, das dem Signal entspricht, das sich von dem Energiesparsignal unterscheidet.

5. Verfahren nach Anspruch 4, wobei jedes Bit im Zielcodebuch, das nicht durch das HARQ-Ergebnis belegt ist, als NACK gesetzt wird.

6. Verfahren nach Anspruch 5, wobei die zweite Zielseriennummer bestimmt wird durch:
Erfassen (301) eines Zielwerts, der durch eine voreingestellte Anzahl von Bits eines bestimmten Informationsfeldes in der Downlink-Steuersignalisierung angegeben ist, die das Leistungsempfangssignal trägt;
Bestimmen (302) einer durch den Zielwert angegebenen Seriennummer als zweite Zielseriennummer, als Reaktion darauf, dass die Zielbitanzahl größer ist als ein zweiter voreingestellter Wert;
Bestimmen (303) der durch den Zielwert angegebenen Seriennummer als zweite Zielseriennummer, als Reaktion darauf, dass die Zielbitanzahl kleiner oder gleich dem zweiten voreingestellten Wert ist und die Anzahl der Ressourcen im PUCCH-Ressourcensatz kleiner oder gleich einem ersten voreingestellten Wert ist; und
Bestimmen (304) der zweiten Zielseriennummer auf der Grundlage einer Seriennummer eines minimalen Steuerkanalelements, CCE, in dem sich der PDCCH befindet, und des Zielwerts, als Reaktion darauf, dass die Zielbitanzahl kleiner oder gleich dem zweiten voreingestellten Wert ist und die Anzahl der Ressourcen im PUCCH-Ressourcensatz größer ist als der erste voreingestellte Wert.

7. Vorrichtung zur Hybrid-Automatic-Repeat-Request-, HARQ, Übertragung, die in ein Endgerät integriert ist, wobei die Vorrichtung aufweist:
ein Signalbestimmungsmodul (410), das dazu ausgebildet ist, ein Zielsignal zu bestimmen, das ein HARQ-Feedback erfordert; und
ein erstes Feedback-Modul (420), das dazu ausgebildet ist, ein dem Zielsignal entsprechendes HARQ-Ergebnis in einem voreingestellten ersten HARQ-Feedback-Modus rückzumelden, als Reaktion auf das Bestimmen, dass das Zielsignal ein Energiesparsignal enthält;
wobei das Endgerät auf der Grundlage einer Angabe einer Basisstation eine Zielbitanzahl für die von einem Zielcodebuch belegten Bits vorkonfiguriert, wobei das Zielcodebuch ein HARQ-Feedback ist, das von einer HARQ-Feedback-Ressource zurückgemeldet wird;
wobei die Vorrichtung ferner aufweist: ein zweites Feedback-Modul (430), das dazu ausgebildet ist, das dem Zielsignal entsprechende HARQ-Ergebnis in einem voreingestellten zweiten HARQ-Feedback-Modus rückzumelden, als Reaktion auf das Bestimmen, dass das Zielsignal ferner ein anderes Signal als das Energiesparsignal enthält;
wobei die Vorrichtung **dadurch gekennzeichnet ist, dass** das Zielcodebuch das dem Energiesparsignal entsprechende HARQ-Ergebnis enthält und die Anzahl der Bits, die derzeit vom Zielcodebuch belegt sind, 1 beträgt; und
das Zielcodebuch ein HARQ-Ergebnis aufweist, das dem Signal entspricht, das sich von dem Energiesparsignal unterscheidet, wobei die Anzahl der Bits, die derzeit vom Zielcodebuch belegt sind, der Zielbitanzahl entspricht.

8. Vorrichtung nach Anspruch 7,
wobei das erste Feedback-Modul (420) aufweist:
ein erstes Feedback-Submodul (421), das so ausgebildet ist, dass es das dem Energiesparsignal entsprechende HARQ-Ergebnis über eine Physical-Uplink-Control-Channel-, PUCCH, Ressource rückmeldet, die einer ersten Zielseriennummer entspricht, wobei die PUCCH-Ressource aus einem PUCCH-Ressourcensatz stammt, der dem Endgerät von der Basisstation vorab zugewiesen wird.

9. Vorrichtung nach Anspruch 8, die ferner aufweist:
ein erstes Erfassungsmodul (440), das so ausgebildet ist, dass es einen Zielwert erfasst, der durch eine voreingestellte Anzahl von Bits eines bestimmten Informationsfeldes in einer Downlink-Steuersignalisierung angegeben ist, die das Leistungsempfangssignal trägt;
ein erstes Seriennummer-Bestimmungsmodul (450), das so ausgebildet ist, dass es eine durch den Zielwert angegebene Seriennummer als erste Zielseriennummer angibt, als Reaktion darauf, dass die Anzahl der Ressourcen im PUCCH-Ressourcensatz kleiner oder gleich einem ersten voreingestellten Wert ist; und
ein zweites Seriennummer-Bestimmungsmodul (460), das so ausgebildet ist, dass es die erste Zielseriennummer auf der Grundlage einer Seriennummer eines minimalen Steuerkanalelements, CCE, in dem sich der PDCCH befindet, und des Zielwerts bestimmt, als Reaktion darauf, dass die Anzahl der Ressourcen im PUCCH-Ressourcensatz größer ist als der erste voreingestellte Wert.

10. Vorrichtung nach Anspruch 7,
wobei das zweite Feedback-Modul (430) aufweist:
ein zweites Feedback-Submodul (431), das so ausgebildet ist, dass es das dem Energiesparsignal entsprechende HARQ-Ergebnis über eine Physical-Uplink-Control-Channel-, PUCCH, Ressource rückmeldet, die einer zweiten Zielseriennummer entspricht, wobei die PUCCH-Ressource aus einem PUCCH-Ressourcensatz stammt, der dem Endgerät von der Basisstation vorab zugewiesen wird; und
ein drittes Feedback-Submodul (432), das so ausgebildet ist, dass es das HARQ-Ergebnis, das dem Signal entspricht, das sich von dem Energiesparsignal unterscheidet, über eine Ressource rückmeldet, die durch das Zielcodebuch angegeben ist, um das HARQ-Ergebnis rückzumelden, das dem Signal entspricht, das sich von dem Energiesparsignal unterscheidet.

11. Computerlesbares Speichermedium, auf dem ein Computerprogramm gespeichert ist, wobei das Computerprogramm so ausgebildet ist, dass es das Verfahren zur Hybrid-Automatic-Repeat-Request-, HARQ, Übertragung nach einem der Ansprüche 1-6 ausführt.

## Revendications

1. Procédé de transmission de demande de répétition automatique hybride, dite HARQ, exécuté par un terminal, le procédé comprenant les étapes consistant à :
déterminer (101) un signal cible nécessitant une rétroaction de HARQ ; et
renvoyer (102) un résultat de HARQ correspondant au signal cible dans un premier mode de rétroaction de HARQ prédéfini, en réponse à la détermination du fait que le signal cible contient un signal de gestion d'énergie ;
dans lequel le terminal préconfigure, sur la base d'une indication provenant d'une station de base, un nombre de bits cible de bits occupés par un livre de codes cible, dans lequel le livre de codes cible est une rétroaction de HARQ renvoyée par une ressource de rétroaction de HARQ ;
dans lequel le procédé comprend en outre l'étape consistant à : renvoyer (103) le résultat de HARQ correspondant au signal cible dans un second mode de rétroaction de HARQ prédéfini, en réponse à la détermination du fait que le signal cible contient en outre un signal autre que le signal de gestion d'énergie ;
le procédé étant **caractérisé en ce que** : le livre de codes cible contient le résultat de HARQ correspondant au signal de gestion d'énergie, et le nombre de bits couramment occupés par le livre de codes cible est de 1 ; et dans lequel le livre de codes cible comprend un résultat de HARQ correspondant au signal autre que le signal de gestion d'énergie, et le nombre de bits couramment occupés par le livre de codes cible est le nombre de bits cible.

2. Procédé selon la revendication 1,
dans lequel l'étape de renvoi (102) du résultat de HARQ correspondant au signal cible dans le premier mode de rétroaction de HARQ prédéfini, consiste à :
renvoyer le résultat de HARQ correspondant au signal de gestion d'énergie par l'intermédiaire d'une ressource de canal physique de commande de liaison montante, dit PUCCH, correspondant à un premier nombre ordinal cible, dans lequel la ressource de PUCCH provient d'un ensemble de ressources de PUCCH attribué au préalable au terminal par la station de base.

3. Procédé selon la revendication 2, dans lequel le premier nombre ordinal cible est déterminé par les étapes consistant à :
obtenir (201) une valeur cible indiquée par un nombre prédéfini de bits d'un champ d'informations désigné dans une signalisation de commande de liaison descendante véhiculant le signal de réception d'énergie ;
déterminer (202) un nombre ordinal indiqué par la valeur cible en tant que le premier nombre ordinal cible, en réponse au fait que le nombre de ressources de l'ensemble de ressources de PUCCH est inférieur ou égal à une première valeur prédéfinie ; et
déterminer (203) le premier nombre ordinal cible sur la base d'un nombre ordinal d'élément de canal de commande, dit CCE, minimal où est situé le PDCCH et de la valeur cible, en réponse au fait que le nombre de ressources de l'ensemble de ressources de PUCCH est supérieur à la première valeur prédéfinie.

4. Procédé selon la revendication 1,
dans lequel l'étape de renvoi (103) du résultat de HARQ correspondant au signal cible dans le second mode de rétroaction de HARQ prédéfini comprend les étapes consistant à :
renvoyer (103-1) le résultat de HARQ correspondant au signal de gestion d'énergie par l'intermédiaire d'une ressource de canal physique de commande de liaison montante, dit PUCCH, correspondant à un second nombre ordinal cible, dans lequel la ressource de PUCCH provient d'un ensemble de ressources de PUCCH attribué au préalable au terminal par la station de base ; et
renvoyer (103-2) le résultat de HARQ correspondant au signal autre que le signal de gestion d'énergie par l'intermédiaire d'une ressource, indiquée par le livre de codes cible, destinée à renvoyer le résultat de HARQ correspondant au signal autre que le signal de gestion d'énergie.

5. Procédé selon la revendication 4, dans lequel chaque bit du livre de codes cible qui n'est pas occupé par le résultat de HARQ est défini en tant que NACK.

6. Procédé selon la revendication 5, dans lequel le second nombre ordinal cible est déterminé par les étapes consistant à :
obtenir (301) une valeur cible indiquée par un nombre prédéfini de bits d'un champ d'informations désigné dans la signalisation de commande de liaison descendante véhiculant le signal de réception d'énergie ;
déterminer (302) un nombre ordinal indiqué par la valeur cible en tant que le second nombre ordinal cible, en réponse au fait que le nombre de bits cible est supérieur à une seconde valeur prédéfinie ;
déterminer (303) le nombre ordinal indiqué par la valeur cible en tant que le second nombre ordinal cible, en réponse au fait que le nombre de bits cible est inférieur ou égal à la seconde valeur prédéfinie, et que le nombre de ressources de l'ensemble de ressources de PUCCH est inférieur ou égal à une première valeur prédéfinie ; et
déterminer (304) le second nombre ordinal cible sur la base d'un nombre ordinal d'élément de canal de commande, dit CCE, minimal où est situé le PDCCH et de la valeur cible, en réponse au fait que le nombre de bits cible est inférieur ou égal à la seconde valeur prédéfinie, et que le nombre de ressources de l'ensemble de ressources de PUCCH est supérieur à la première valeur prédéfinie.

7. Appareil de transmission de demande de répétition automatique hybride, dite HARQ, intégré dans un terminal, l'appareil comprenant :
un module de détermination de signal (410), configuré pour déterminer un signal cible nécessitant une rétroaction de HARQ ; et
un premier module de rétroaction (420), configuré pour renvoyer un résultat de HARQ correspondant au signal cible dans un premier mode de rétroaction de HARQ prédéfini, en réponse à la détermination du fait que le signal cible contient un signal de gestion d'énergie ;
dans lequel le terminal préconfigure, sur la base d'une indication provenant d'une station de base, un nombre de bits cible de bits occupés par un livre de codes cible, dans lequel le livre de codes cible est une rétroaction de HARQ renvoyée par une ressource de rétroaction de HARQ ;
dans lequel l'appareil comprend en outre : un second module de rétroaction (430), configuré pour renvoyer le résultat de HARQ correspondant au signal cible dans un second mode de rétroaction de HARQ prédéfini, en réponse à la détermination du fait que le signal cible contient en outre un signal autre que le signal de gestion d'énergie ;
l'appareil étant **caractérisé en ce que**, le livre de codes cible contient le résultat de HARQ correspondant au signal de gestion d'énergie, et le nombre de bits couramment occupés par le livre de codes cible est de 1 ; et le livre de codes cible comprend un résultat de HARQ correspondant au signal autre que le signal de gestion d'énergie, le nombre de bits couramment occupés par le livre de codes cible étant le nombre de bits cible.

8. Appareil selon la revendication 7,
dans lequel le premier module de rétroaction (420) comprend :
un premier sous-module de rétroaction (421), configuré pour renvoyer le résultat de HARQ correspondant au signal de gestion d'énergie par l'intermédiaire d'une ressource de canal physique de commande de liaison montante, dit PUCCH, correspondant à un premier nombre ordinal cible, dans lequel la ressource de PUCCH provient d'un ensemble de ressources de PUCCH attribué au préalable au terminal par la station de base.

9. Appareil selon la revendication 8, comprenant en outre :
un premier module d'obtention (440), configuré pour obtenir une valeur cible indiquée par un nombre prédéfini de bits d'un champ d'informations désigné dans une signalisation de commande de liaison descendante véhiculant le signal de réception d'énergie ;
un premier module de détermination de nombre ordinal (450), configuré pour déterminer un nombre ordinal indiqué par la valeur cible en tant que le premier nombre ordinal cible, en réponse au fait que le nombre de ressources de l'ensemble de ressources de PUCCH est inférieur ou égal à une première valeur prédéfinie ; et
un second module de détermination de nombre ordinal (460), configuré pour déterminer le premier nombre ordinal cible sur la base d'un nombre ordinal d'élément de canal de commande, dit CCE, minimal où est situé le PDCCH et de la valeur cible, en réponse au fait que le nombre de ressources de l'ensemble de ressources de PUCCH est supérieur à la première valeur prédéfinie.

10. Appareil selon la revendication 7,
dans lequel le second module de rétroaction (430) comprend :
un deuxième sous-module de rétroaction (431), configuré pour renvoyer le résultat de HARQ correspondant au signal de gestion d'énergie par l'intermédiaire d'une ressource de canal physique de commande de liaison montante, dit PUCCH, correspondant à un second nombre ordinal cible, dans lequel la ressource de PUCCH provient d'un ensemble de ressources de PUCCH attribué au préalable au terminal par la station de base ; et
un troisième sous-module de rétroaction (432), configuré pour renvoyer le résultat de HARQ correspondant au signal autre que le signal de gestion d'énergie par l'intermédiaire d'une ressource, indiquée par le livre de codes cible, destinée à renvoyer le résultat de HARQ correspondant au signal autre que le signal de gestion d'énergie.

11. Support d'informations lisible par ordinateur comportant un programme d'ordinateur maintenu en son sein, dans lequel le programme d'ordinateur est configuré pour exécuter le procédé de transmission de demande de répétition automatique hybride, dite HARQ, selon l'une quelconque des revendications 1 à 6.
